# EUROPEAN PATENT APPLICATION

(11) **EP 2 754 874 A1**
(43) Date of publication of application: **16.07.2014**
(21) Application number: 12829287.7
(22) Date of filing: 23.08.2012
(51) Int. Cl.: F02B 23/06, F02F 3/26

(54) **DIRECT-INJECTION ENGINE COMBUSTION CHAMBER STRUCTURE**

(30) Priority: 05.09.2011 JP 2011192843
(71) Applicant: Isuzu Motors, Ltd., Tokyo 140-8722 (JP)
(72) Inventor: KAMIJYOU Tomoyuki, Fujisawa-shi Kanagawa 252-0881 (JP); MIZUKI Tooru, Fujisawa-shi Kanagawa 252-0881 (JP); UCHIDA Shuuji, Fujisawa-shi Kanagawa 252-0881 (JP); NAGATA Shinichi, Fujisawa-shi Kanagawa 252-0881 (JP); KAKEHI Yukihisa, Fujisawa-shi Kanagawa 252-0881 (JP)
(74) Representative: Schaumburg, Thoenes, Thurn, Landskron, Eckert
(86) International application number: PCT/JP2012/071320
(87) International publication number: WO 2013/035544

(57) **Abstract**

To provide a direct-injection engine combustion chamber structure which produces less NOx or smoke and consumes less fuel by actively combusting the fuel in a squish area.

Provided at a top surface 17 of a piston 10 are an inclined surface 19 and an orthogonal surface 20. The inclined surface continuous with an inner peripheral wall surface 16 of a cavity 11 extends outward in a radial direction of the piston 10 and gets shallower toward the outer side in the radial direction of the piston 10, whereas the orthogonal surface continuous with an outer periphery of the inclined surface 19 without a gap extends to an outer peripheral surface 21 of the piston 10 and is orthogonal to a central axis C of the piston 10.

## Description

### TECHNICAL FIELD

The present invention relates to a direct-injection engine combustion chamber structure in which fuel is injected, from an injection hole of an injector disposed above a piston, to a cavity that is a recess provided at the center of the top of the piston.

### BACKGROUND ART

The shape of a combustion chamber (a cavity) provided at the top of a piston of a direct-injection diesel engine includes a shallow pan type, a reentrant type, a toroidal type, and the like. A combustion chamber structure of a conventional direct-injection diesel engine focuses primarily on combusting fuel inside the cavity.

The combustion chamber structure of the direct-injection diesel engine of this type is described in Patent Document 1, for example.

### PRIOR ART DOCUMENT

### PATENT DOCUMENT

Patent Document 1: JP 2007-211644 A

### DISCLOSURE OF THE INVENTION

### PROBLEMS TO BE SOLVED BY THE INVENTION

Focusing primarily on combusting fuel inside the cavity, the conventional combustion chamber structure of the direct-injection diesel engine is not adapted to actively combust the fuel in a squish area (an area between the top surface of the piston and the ceiling of a cylinder). Accordingly, a combustion zone is biased within the cavity, thereby making it difficult to improve emission or reduce fuel consumption.

Now, an object of the present invention is to provide a direct-injection engine combustion chamber structure which produces less NOx (nitrogen oxide) or smoke and consumes less fuel by actively combusting the fuel in the squish area.

### MEANS FOR SOLVING THE PROBLEMS

In order to achieve the above object, the present invention includes: a cavity which is a recess provided at a center of a top of a piston and to which fuel is injected from an injection hole of an injector disposed above the piston; an inclined surface which is continuous with an inner peripheral wall surface of the cavity, extends outward in a radial direction of the piston, and gets shallower toward an outer side of the radial direction of the piston; and an orthogonal surface which is continuous with an outer periphery of the inclined surface without a gap, extends to an outer peripheral surface of the piston, and is orthogonal to a central axis of the piston, the inclined surface and the orthogonal surface being provided at a top surface of the piston.

An angle of the inclined surface is preferably set within a range of 1 to 30 degrees from a side of the orthogonal surface.

A shape of the cavity may be of a reentrant type, a toroidal type, or a shallow pan type.

The direct-injection engine may be either a direct-injection diesel engine or a direct-injection gasoline engine.

### EFFECTS OF THE INVENTION

The present invention can bring the superior effect of providing the direct-injection engine combustion chamber structure which produces less NOx or smoke and consumes less of the fuel by actively combusting the fuel in the squish area.

### BRIEF DESCRIPTION OF THE DRAWINGS

Fig. 1 is a side cross-sectional view of a piston illustrating a direct-injection engine combustion chamber structure according to an embodiment of the present invention.
Fig. 2 is a side cross-sectional view of a piston illustrating a combustion chamber structure according to a variation.

### BEST MODES FOR CARRYING OUT THE INVENTION

Preferred embodiments of the present invention will now be described in detail with reference to the drawings.

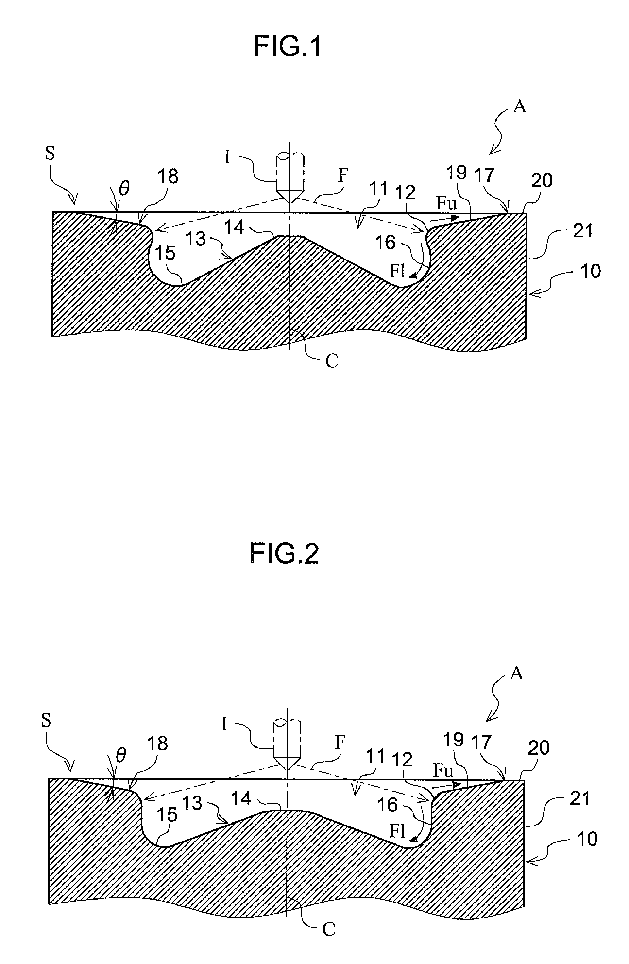

As illustrated in Fig. 1, a direct-injection engine combustion chamber structure A according to the present embodiment includes a cavity (a combustion chamber) 11 that is a recess provided at the center of a top of a piston 10 of a direct-injection diesel engine. Fuel is injected to the cavity 11 from an injector I that is disposed above the piston 10 and has the center of an injection hole above a join line (indicated by a reference numeral 18 in Fig. 1, for example) between an inclined surface 19 and a lip portion 12 to be described later. The shape of the cavity 11 in the present embodiment is a reentrant type.

In the combustion chamber structure A according to the present embodiment, a center protrusion 14 and a recess 15 on an outer peripheral side of the center protrusion 14 are provided at a bottom surface 13 of the cavity 11 of. That is, the mixing of fuel and air can be accelerated by supplying the fuel to the air movement generated within the cavity 11. The center protrusion 14 in the present embodiment has a truncated cone shape. Note that the shape of the center protrusion 14 is not limited to the truncated cone.

Further, in the combustion chamber structure A according to the present embodiment, the inclined surface (a tapered surface) 19 which is continuous with an inner peripheral wall surface 16 of the cavity 11 extends outward in a radial direction of the piston 10 and gets shallower toward an outer side of the radial direction of the piston10, and an orthogonal surface 20 which is continuous with an outer periphery of the inclined surface 19 without a gap extends to an outer peripheral surface 21 of the piston 10 and is orthogonal to a central axis C of the piston 10 are provided at a top surface 17 of the piston 10. In other words, the top surface 17 of the piston 10 in the present embodiment is formed of the inclined surface 19 and the orthogonal surface 20. Further, the inclined surface 19 and the orthogonal surface 20 form a circle all around the circumference. An angle θ of the inclined surface 19 is set within the range of 1 to 30 degrees from the side of the orthogonal surface 20. In the present embodiment, the angle θ of the inclined surface 19 is set to 10 degrees from the side of the orthogonal surface 20.

Further provided in the combustion chamber structure A according to the present embodiment is the lip portion 12 that is a connecting portion between the inner peripheral wall surface 16 of the cavity 11 and the top surface 17 of the piston 10. The lip portion 12 forms a circle all around the circumference of the cavity 11. The cross section of the lip portion 12 has an R shape in the present embodiment.

The working of the present embodiment will be described.

As illustrated in Fig. 1, fuel F is injected from the injection hole of the injector I toward the lip portion 12 of the cavity 11 when the piston 10 reaches near the top dead center of compression. The fuel F being injected collides against the lip portion 12 of the cavity 11 and breaks up into fuel Fl flowing downward into the cavity 11 and fuel Fu flowing upward into a squish area S.

The inclined surface 19 being provided at the top surface 17 of the piston 10 in the combustion chamber structure A according to the present embodiment, the fuel injected toward the lip portion 12 of the cavity 11 can be dispersed into the squish area S and the cavity 11. The air utilization inside the whole cylinder is increased as a result so that the homogenization of fuel-air mixture is accelerated to suppress the production of smoke or a PM (particulate matter). Particularly in the present embodiment, the fuel can be guided to the outer peripheral side of the squish area S since there is no gap between the inclined surface 19 and the orthogonal surface 20.

The inclined surface 19 being provided at the top surface 17 of the piston 10 in the combustion chamber structure A according to the present embodiment, the squish area S is widened by the amount of inclination of the inclined surface 19. The wide squish area S allows the speed of a squish flow of the gas flowing from the squish area S to the combustion chamber (the cavity 11) at the time of a compression stroke as well as the speed of a reverse squish flow flowing from the combustion chamber (the cavity 11) to the squish area S at the time of an expansion stroke to be decreased, so that the intensity of turbulence is reduced to have less heat loss from the wall surface of the combustion chamber and the wall surface of the cylinder. Moreover, the reduced heat loss leads to a higher gas temperature and improved combustion efficiency. The fuel consumption rate is decreased as a result.

Moreover, the reduced intensity of turbulence allows the mixing of the fuel and oxygen to slow down and a heat generation rate to rise slowly, thereby reducing a local high-temperature combustion zone. The fuel-air mixture of the fuel and air flowing into the squish area S is combusted in the spacious squish area S, whereby the increase in the combustion temperature can be suppressed. The production of NOx can be suppressed as a result.

Now, a recess (a valve recess) is provided at the top surface 17 of the piston 10 in some cases in order to avoid contact between an exhaust valve or an intake valve and the piston 10. In such case, it has been required to pursue the optimal shape of the combustion chamber individually since a compression ratio or a combustion state changes greatly depending on the presence of the recess. In the present embodiment, on the other hand, the change in shape of the piston 10 caused by the recess being formed can be kept at a distance on the outer peripheral side of the cavity 11 away from the center thereof because the inclined surface 19 is provided at the top surface 17 of the piston 10. That is, the change in shape of the piston 10 caused by the recess being formed reaches not the inner peripheral side of the top surface 17 but only the outer peripheral side thereof. As a result, the difference in the combustion states caused by the presence of the recess can be suppressed as much as possible. Moreover, the difference in the compression ratios caused by the presence of the recess can be suppressed since there is less effect of the change in shape of the combustion chamber caused by the recess being formed.

Moreover, it has been required to greatly change the shape of the combustion chamber due to the change in the compression ratio. In the present embodiment, on the other hand, the compression ratio can easily be changed by adjusting the angle θ of the inclined surface 19.

While the preferred embodiments of the present invention have been described, the present invention is not limited to the aforementioned embodiments but can adopt various other embodiments.

The shape of the cavity 11 is not limited to the reentrant type but may be the shallow pan type or the toroidal type, for example. Fig. 2 illustrates a variation where the shape of the cavity 11 is the toroidal type. Note that in Fig. 2, an element that is substantially identical to that in Fig. 1 is assigned the same reference numeral as that in Fig. 1.

Moreover, the direct-injection engine is not limited to the direct-injection diesel engine but may be a direct-injection gasoline engine.

### EXPLANATION OF REFERENCE NUMERALS

- 10: piston
- 11: cavity
- 16: inner peripheral wall surface
- 17: top surface
- 19: inclined surface
- 20: orthogonal surface
- 21: outer peripheral surface
- A: combustion chamber structure
- C: central axis of piston
- I: injector

## Claims

1. A direct-injection engine combustion chamber structure comprising
a cavity which is a recess provided at a center of a top of a piston and to which fuel is injected from an injection hole of an injector disposed above the piston;
an inclined surface which is continuous with an inner peripheral wall surface of the cavity, extends outward in a radial direction of the piston, and gets shallower toward an outer side of the radial direction of the piston; and
an orthogonal surface which is continuous with an outer periphery of the inclined surface without a gap, extends to an outer peripheral surface of the piston, and is orthogonal to a central axis of the piston, wherein
the inclined surface and the orthogonal surface are provided at a top surface of the piston.

2. The direct-injection engine combustion chamber structure according to claim 1, wherein an angle of the inclined surface is set within a range of 1 to 30 degrees from a side of the orthogonal surface.

3. The direct-injection engine combustion chamber structure according to claim 1 or 2, wherein a shape of the cavity is of a reentrant type, a toroidal type, or a shallow pan type.

4. The direct-injection engine combustion chamber structure according to any of claims 1 to 3, wherein the direct-injection engine is either a direct-injection diesel engine or a direct-injection gasoline engine.
